# EUROPEAN PATENT SPECIFICATION

(11) **EP 1 542 258 B1**
(45) Date of publication and mention of the grant of the patent: **30.05.2007**
(21) Application number: 04254524.4
(22) Date of filing: 28.07.2004
(51) Int. Cl.: H01J 31/12

(54) **Field emission display**
Feldemissionsanzeige
Dispositif d'affichage à émission de champ

(30) Priority: 27.11.2003 KR 2003084963; 19.05.2004 KR 2004035534
(43) Date of publication of application: 15.06.2005
(73) Proprietor: Samsung SDI Co., Ltd., Suwon-si, Gyeonggi-do (KR)
(72) Inventor: Oh, Tae-sik, Suwon-si Gyeonggi-do (KR)
(74) Representative: Greene, Simon Kenneth

(56) References cited:
- EP-A- 1 089 310
- EP-A- 1 313 122
- US-A- 5 552 659
- US-A1- 2003 184 214
- US-A1- 2003 184 357

## Description

The present invention relates to a field emission display, and more particularly, to a field emission display having an emitter structure that improves focusing characteristics of electron beams.

Display devices, which account for one of the most important parts of conventional data transmitting media, have been used in personal computers and television receivers. The display devices include cathode ray tubes (CRTs), which use high-speed heat electron emission, and flat panel displays, such as a liquid crystal display (LCD), a plasma display panel (PDP), and a field emission display (FED), which have been rapidly developing in recent years.

Of those flat panel displays, an FED is a display device that enables an emitter arranged at regular intervals on a cathode electrode to emit electrons by applying a strong electric field to the emitter and radiates light by colliding the electrons with a fluorescent material coated on the surface of an anode electrode. Since the FED forms and displays images thereon by using the emitter as an electron source, the quality of the images may vary considerably depending on the material and structure of the emitters.

Early FEDs use a spindt-type metallic tip (or a micro tip) formed of molybdenum (Mo) as an emitter. In order to arrange such metallic tip-type emitter in an FED, however, an ultramicroscopic hole should be formed, and molybdenum should be evenly deposited on the entire surface of a screen, which requires the use of difficult techniques and expensive equipment and thus results in an increase in manufacturing costs. Therefore, there is a clear limit in manufacturing a wide screen FED.

In the industry of FEDs, research on methods of forming a flat emitter of an FED, which can emit sufficient amounts of electrons even at a low driving voltage and, eventually, can simplify processes of manufacturing the FED, is under way.

Current trends in the FED industry show that carbon-based materials, for example, graphite, diamond, diamond-like carbon (DLC), fulleren (C₆₀), or carbon nano-tubes (CNTs), are suitable for the manufacture of a flat emitter and the CNTs, in particular, are considered most desirable because they can successfully emit electrons even at a low driving voltage.

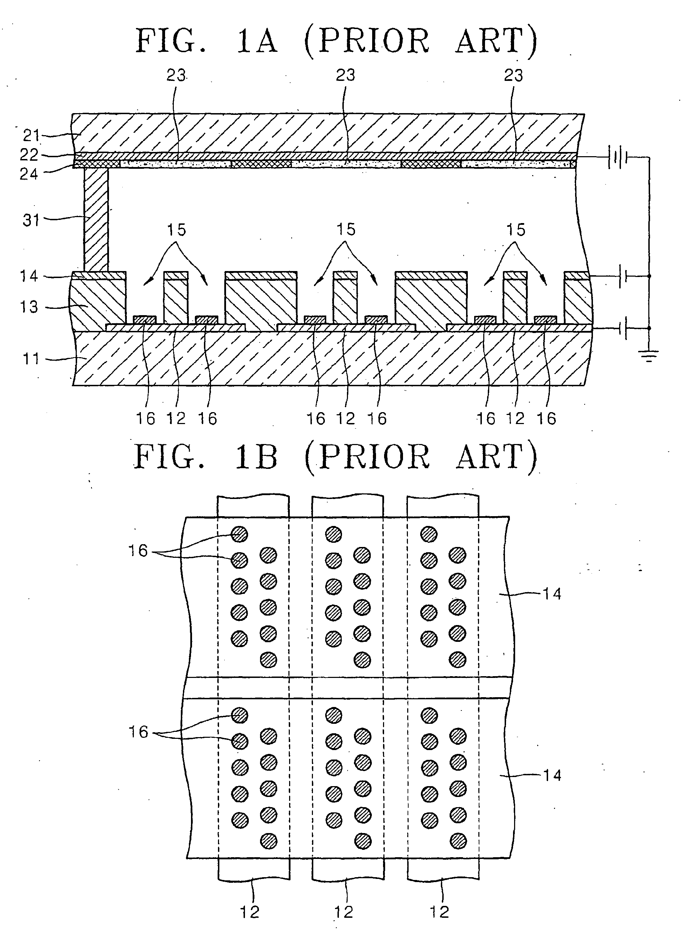

FIGS. 1A and 1 B are a cross-sectional view and a plan view, respectively, of a conventional FED. Referring to FIGS. 1 A and 1B, the conventional FED has a triode structure comprised of a cathode electrode 12, an anode electrode 22, and a gate electrode 14. The cathode electrode 12 and the gate electrode 14 are formed on a rear substrate 11, and the anode electrode 22 is formed at the bottom of a front substrate 21. A fluorescent layer 23 is formed of R, G, and B fluorescent materials, and a black matrix 24 is formed on the bottom surface of the anode electrode 22 so as to improve contrast. The rear substrate 11 and the front substrate 21 are a predetermined distance apart from each other. The predetermined distance between the rear substrate 11 and the front substrate 21 is maintained because of a spacer 31 disposed between the rear substrate 11 and the front substrate 21. When manufacturing the conventional FED, the cathode electrode 12 is formed on the rear substrate 11, an insulation layer 13 and the gate electrode 14, both having minute apertures 15 therein, are deposited on the rear substrate 11, and an emitter 16 is formed in each of the apertures 15 on the cathode electrode 12.

The conventional FED, however, may degrade the color purity and general picture quality of images for the following reasons. Most of the electrons emitted from the emitter 16 come from edges of the emitter 16. The electrons are converted into an electron beam, and the electron beam proceeds to the fluorescent layer 23. However, when proceeding to the fluorescent layer 23, the electron beam may disperse due to a voltage of several to dozens of volts applied to the gate electrode 14, in which case, the electron beam illuminates not only a fluorescent material of a desired pixel but also fluorescent materials of pixels adjacent to the desired pixel.

In order to minimize the tendency of the electron beam emitted from the emitter to disperse toward the fluorescent layer 23, a plurality of emitters each having a smaller area than the emitter 16 corresponding to one pixel can be disposed on the cathode electrode 12 in each of the apertures 15. In this case, however, there is a clear limit in forming a plurality of emitters well in each pixel having a predetermined size, the entire area of the emitter 16 for illuminating a fluorescent material of one pixel decreases, and an electron beam is not focused sufficiently.

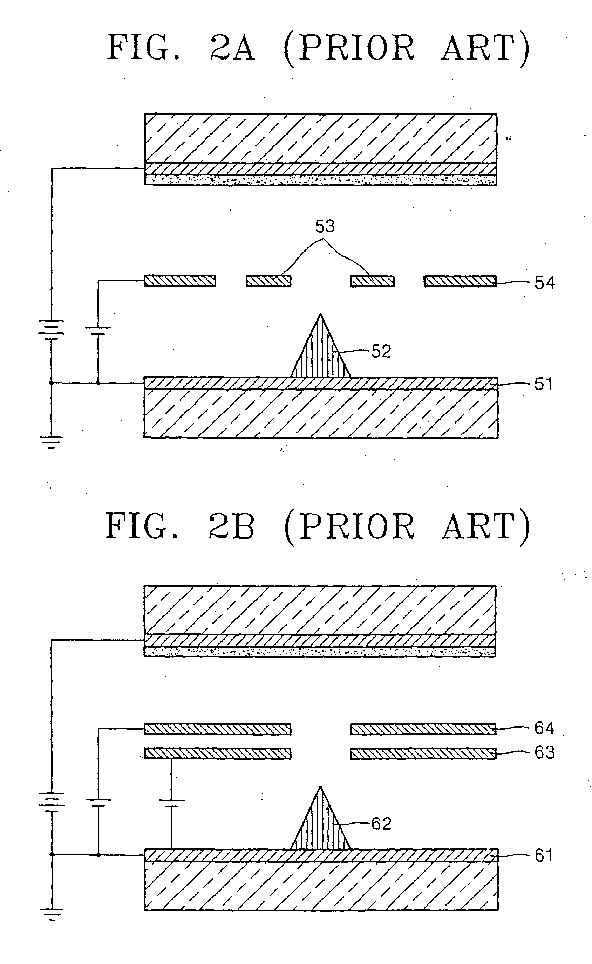

In order to prevent an electron beam from dispersing when proceeding to a fluorescent layer, another conventional FEDs respectively having structures, which are illustrated in FIGS. 2A and 2B, have been suggested. The conventional FEDs of FIGS. 2A and 2B each include an additional electrode disposed near a gate electrode to enhance the focusing characteristics of electron beams.

More specifically, in the conventional FED of FIG. 2A, a focusing electrode 54, which is ring-shaped, is disposed around a gate electrode 53. In the conventional FED of FIG. 2B, a double gate structure comprising a lower gate electrode 63 and an upper gate electrode 64 is provided to focus electron beams. However, the conventional FEDs of FIGS. 2A and 2B have a relatively complicated structure. In addition, the structure of the conventional FED of FIG. 2A or 2B, in which an emitter 52 or 62, which is a metallic micro-tip, is formed on a cathode electrode 51 or 61, has not yet been proven satisfactorily fruitful when it comes to its application to an FED having a flat emitter.

In the meantime, U.S. Patent No. 5,552,659 discloses an electron emitter that reduces electron emission divergence by imposing restrictions on a ratio between the thickness of a non-insulation layer formed on a substrate where the electron emitter is formed and the thickness of a dielectric layer and a ratio between the diameter of a hole formed through the non-insulation layer, the dielectric layer, and a gate layer formed on the dielectric layer and the thickness of the non-insulation layer. However, it is very difficult to manufacture the electron emitter because the electron emitter has a very complicated structure in which a plurality of holes are formed to correspond to each pixel, and a plurality of electron emitters are formed in each of the holes. In addition, there are spatial restrictions in manufacturing the electron emitter. Therefore, there is a limit in maximizing the number and area of emitters corresponding to each pixel, and the lifetime of the emitters may be shortened when driving the emitters for a long time.

### SUMMARY OF THE INVENTION

The present invention provides a field emission display (FED) that can improve the focusing characteristics of electron beams.

According to an aspect of the present invention, there is provided a field emission display (FED) according to claim 1. The FED includes a first substrate; a cathode electrode formed on the first substrate; a conductive layer formed on the cathode electrode to have a first aperture, through which the cathode electrode is partially exposed; an insulation layer formed on the conductive layer to have a second aperture, which is connected to the first aperture; a gate electrode formed on the insulation layer to have a third aperture, which is connected to the second aperture; emitters formed on the cathode electrode exposed through the first aperture, the emitters being disposed a predetermined distance apart from each other at either side of the first aperture; and a second substrate disposed to face the first substrate with a predetermined distance therebetween, the second substrate, on which an anode electrode and a fluorescent layer having a predetermined pattern are formed.

A cavity may be formed in the cathode electrode between the emitters so that the first substrate can be exposed therethrough.

The first, second, and third apertures and the cavity may be rectangles extending in a longitudinal direction of the cathode electrode.

The widths of the third and second apertures may be larger than the width of the first aperture, and the width of the cavity is smaller than the width of the first aperture.

The predetermined distance between the emitters may be smaller than the width of the first aperture, and the width of the cavity may be smaller than the distance between the emitters.

The width of the third aperture may be the same as the width of the second aperture.

The width of the third aperture may be larger than the width of the second aperture.

Conductive layers may be formed at both sides of the cathode electrode and may extend in the longitudinal direction of the cathode electrode, and the first aperture may be formed between the conductive layers.

Conductive layers may be formed at both sides of the cathode electrode to have a predetermined length, and the first aperture may be formed between the conductive layers.

The conductive layer may be formed on the cathode electrode to surround the first aperture.

The conductive layer may include an insulation material layer formed to cover a top surface and side surfaces of the cathode electrode and a metal layer formed on the insulation material layer.

A plurality of first apertures, a plurality of second apertures, and a plurality of third apertures may be formed for each pixel, and the emitters may be formed in each of the plurality of first apertures.

The emitters may be formed of a carbon-based material.

The emitters may be formed of carbon nano-tubes.

According to another aspect of the present invention, there is provided a field emission display (FED). The FED includes a first substrate; a cathode electrode formed on the first substrate; a conductive layer formed on the cathode electrode to have a first circular aperture, through which the cathode electrode is partially exposed; an insulation layer formed on the conductive layer to have a second circular aperture, which is connected to the first circular aperture; a gate electrode formed on the insulation layer to have a third circular aperture, which is connected to the second circular aperture; an emitter formed as a ring on the cathode electrode exposed through the first circular aperture, the emitter being disposed along an inner circumference of the first circular aperture; and a second substrate disposed to face the first substrate with a predetermined .distance therebetween, the second substrate, on which an anode electrode and a fluorescent layer having a predetermined pattern are formed.

A cavity may be formed in the cathode electrode in the emitter to be circular so that the first substrate can be exposed therethrough.

A plurality of first circular apertures, a plurality of second circular apertures, and a plurality of third circular apertures may be formed for each pixel, and the emitter may be formed in each of the plurality of first circular apertures.

According to another aspect of the present invention, there is provided a field emission display (FED). The FED includes a first substrate; a cathode electrode formed on the first substrate; an insulation material layer formed on the cathode electrode; a conductive layer formed on the insulation material layer; a first aperture formed through the insulation material layer and the conductive layer so that the cathode electrode can be partially exposed therethrough; an insulation layer formed on the conductive layer to have a second aperture, which is connected to the first aperture; a gate electrode formed on the insulation layer to have a third aperture, which is connected to the second aperture; emitters formed on the cathode electrode exposed through the first aperture, the emitters being disposed at both sides of the first aperture so that they can be a predetermined distance apart from each other; and a second substrate disposed to face the first substrate with a predetermined distance therebetween, the second substrate, on which an anode electrode and a fluorescent layer having a predetermined pattern are formed.

The conductive layer may be insulated from the cathode electrode by the insulation material layer.

According to another aspect of the present invention, there is provided a field emission display (FED). The FED includes a first substrate; a cathode electrode formed on the first substrate; an insulation material layer formed on the cathode electrode; a conductive layer formed on the insulation material layer; a first circular aperture formed through the insulation material layer and the conductive layer so that the cathode electrode can be partially exposed therethrough; an insulation layer formed on the conductive layer to have a second circular aperture, which is connected to the first circular aperture; a gate electrode formed on the insulation layer to have a third circular aperture, which is connected to the second circular aperture; an emitter formed as a ring on the cathode electrode exposed through the first circular aperture, the emitter being disposed along an inner circumference of the first circular aperture; and a second substrate disposed to face the first substrate with a predetermined distance therebetween, the second substrate, on which an anode electrode and a fluorescent layer having a predetermined pattern are formed.

The conductive layer may be insulated from the cathode electrode by the insulation material layer.

### BRIEF DESCRIPTION OF THE DRAWINGS

The above and other features and advantages of the present invention will become more apparent by describing in detail exemplary embodiments thereof with reference to the attached drawings in which:
FIGS. 1A and 1 B are a cross-sectional view and a plan view, respectively, of a conventional field emission display (FED);
FIGS. 2A and 2B are cross-sectional views of other conventional FEDS;
FIG. 3 is a cross-sectional view of an FED according to a first embodiment of the present invention;
FIG. 4 is a plan view of the FED of FIG. 3;
FIGS. 5A, 5B, and 5C are perspective views of three examples of a conductive layer formed on each cathode electrode of the FED of FIG. 3;
FIGS. 6, 7, and 8 are cross-sectional views of variations of the FED of FIG. 3;
FIG. 9 is a plan view of an FED according to a second embodiment of the present invention;
FIG. 10 is a plan view of an FED according to a third embodiment of the present invention;
FIGS. 11A, 11B, and 11 C are diagrams illustrating electron beam emission simulation results of the conventional FED of FIG. 1;
FIGS. 12A, 12B, and 12C are diagrams illustrating electron beam emission simulation results of the FED of FIG. 3 in a case where no cavity is formed in each cathode electrode of the corresponding FED;
FIGS. 13A, 13B, and 13C are diagrams illustrating electron beam emission simulation results of the FED of FIG. 3 in a case where a cavity is formed in each cathode electrode of the corresponding FED;
FIGS. 14A, 14B, and 14C are diagrams illustrating electron beam emission simulation results of the FED of FIG. 3 in a case where the width of the cavity formed in each cathode electrode of the corresponding FED has been changed;
FIGS. 15A, 15B, and 15C are diagrams illustrating electron beam emission simulation results of the FED of FIG. 7; and
FIGS. 16A and 16B are diagrams illustrating electron beam emission simulation results of the FED of FIG. 8.

### DETAILED DESCRIPTION OF THE INVENTION

The present invention will now be described more fully with reference to the accompanying drawings, in which exemplary embodiments of the invention are shown. In the drawings, like reference numerals represent like elements.

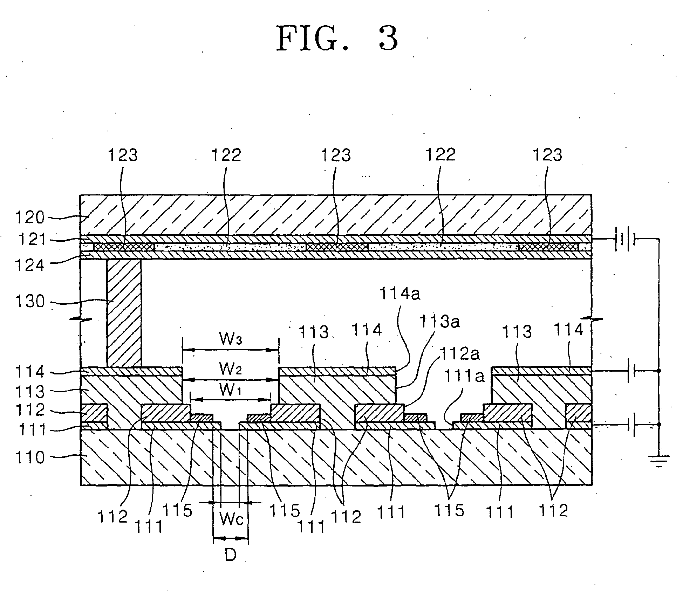

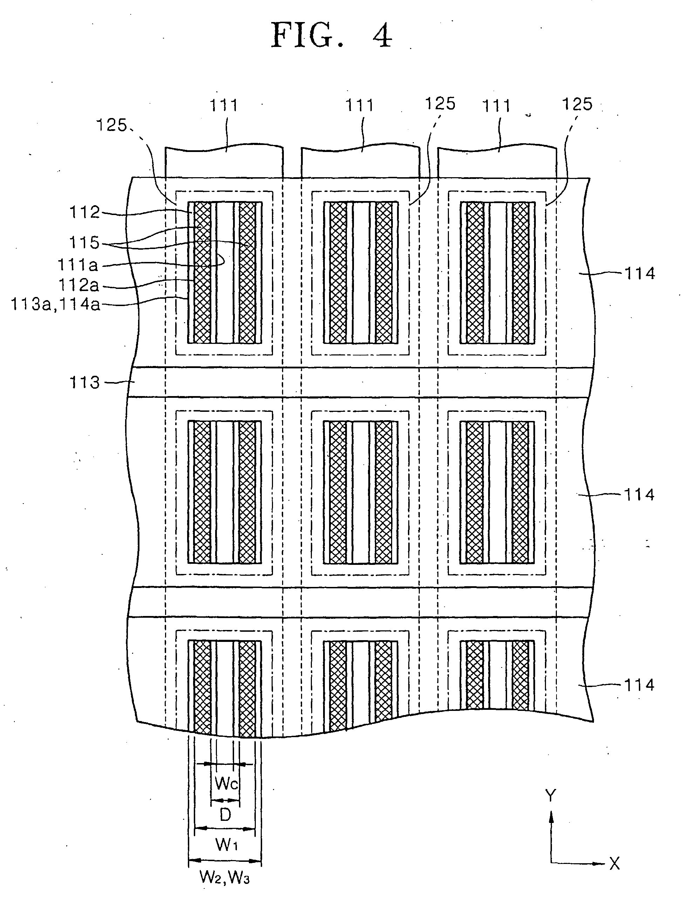

FIGS. 3 and 4 are a cross-sectional view and a plan view, respectively, of a field emission display (FED) according to a first embodiment of the present invention. Referring to FIGS. 3 and 4, the FED includes two substrates, i.e., a first substrate 110, which is referred to as a rear substrate, and a second substrate 120, which is referred to as a front substrate. The rear substrate 110 and the front substrate 120 are formed so that they can be a predetermined distance apart from each other facing each other. A spacer 130 is disposed between the rear substrate 110 and the front substrate 120 so that the predetermined distance therebetween can be maintained. The rear and front substrates 110 and 120 are typically formed of glass substrates.

A structure that can emit electrons is formed on the rear substrate 110, and a structure that can realize images using the emitted electrons is formed on the front substrate 120.

More specifically, a plurality of cathode electrodes 111 are arranged on the rear substrate 110 at regular intervals in a predetermined pattern, for example, as stripes. The cathode electrodes 111 are formed by depositing a conductive metallic material or a transparent conductive material, such as, indium tin oxide (ITO), on the rear substrate 110 to a thickness of, for example, several hundreds to several thousands of Å and patterning the deposited conductive metallic material or transparent conductive material as stripes. The material of the cathode electrodes 111 may be determined depending on how emitters 115 are formed, which will be described in greater detail later.

Cavities 111 a are preferably formed in the cathode electrodes 111 so that the rear substrate 110 can be exposed therethrough. Each of the cavities 111 a is disposed between emitters 115. The cavities 111 a may be formed so that they can one-to-one correspond to the pixels 125. In addition, the cavities 111a may be formed, in consideration of the shape of their respective pixels 124, as rectangles extending longer in the longitudinal direction of the cathode electrodes 111, i.e., a Y direction, than in the latitudinal direction of the cathode electrodes 111, i.e., an X direction.

A conductive layer 112 is formed on each of the cathode electrodes 111 so as to be electrically connected to each of the cathode electrodes 111. The conductive layer 112 may be formed to a thickness of about 2 - 5 µm by coating a conductive paste on each of the cathode electrodes 111 using a screen printing method and plasticizing the conductive paste at a predetermined temperature. First apertures 112a, through which the cathode electrodes 111 are partially exposed, are formed in the conductive layer 112. The first apertures 112a may be formed as rectangles that extend longer in the longitudinal direction of the cathode electrodes 111 (i.e., the Y direction) than in the latitudinal direction of the cathode electrodes 111 (i.e., the X direction) so that it can correspond to one of the pixels 125. In a case where the cavities 111 a are formed in the cathode electrodes 111, as described above, the first apertures 112a are formed to have a width W₁, which is larger than a width W_{c} of the cavities 111 a, so that they can be connected to their respective cavities 111 a.

An insulation layer 113 is formed on the conductive layer 112. The insulation layer 113 is formed on the entire surface of the rear substrate 110 so that not only the top surface of the conductive layer 112 but also the rear substrate 110 exposed between the cathode electrodes 111 can be covered with the insulation layer 113, as shown in FIG. 3. The insulation layer 113 may be formed to a thickness of about 10 - 20 µm by coating a paste-type insulating material (on the rear substrate 110) using a screen printing method and plasticizing the insulating material at a predetermined temperature. Second apertures 113a are formed in the insulating layer 113 so that they can be connected to their respective first apertures 112a. The second apertures 113a may be formed as rectangles that extend longer in the longitudinal direction of the cathode electrodes 111 (i.e., the Y direction) than in the latitudinal direction of the cathode electrodes 111 (i.e., the X direction) so that they can one-to-one correspond to the pixels 125. In addition, the second apertures 113a are formed to have a width W₂, which is larger than the width W₁ of the first apertures 112a. Accordingly, the conductive layer 112 is partially exposed through the second apertures 113a.

A plurality of gate electrodes 114 are formed on the insulation layer 113 at regular intervals in a predetermined pattern, for example, as stripes. The gate electrodes 114 extend in a direction perpendicular to the longitudinal direction of the cathode electrodes 111 (the Y direction), i.e., in the X direction. The gate electrodes 114 may be formed by depositing a conductive metal, e.g., chrome (Cr), on the insulation layer 113 using a sputtering method and patterning the conductive metal into stripes. Third apertures 114a, which are connected to their respective second apertures 113a, are each formed among the gate electrodes 114. The third apertures 114a have the same shape as the second apertures 113a. The third apertures 114a may have a width W₃, which is the same as the width W₂ of the second apertures 113a.

The emitters 115 are formed on each of the cathode electrodes 111 exposed through the first apertures 112a. The emitters 115 are formed to have a smaller thickness than the conductive layer 112 and to be flat on the cathode electrodes 111. The emitters 115 emit electrons when affected by an electric field generated by voltage applied between the cathode electrodes 111 and the gate electrodes 114. In the present invention, the emitters 115 are formed of a carbon-based material, for example, graphite, diamond, diamond-like carbon (DLC), fulleren (C₆₀), or carbon nano-tubes (CNTs). Preferably, the emitters 115 are formed of CNTs, in particular, so that they can smoothly emit electrons even at a low driving voltage.

In the present embodiment, the emitters 115 are disposed at either side of each of the first apertures 112a so that they are a predetermined distance apart from each other. For example, two emitters 115 may be disposed in a first aperture 112a in contact with side surfaces of the conductive layer 112 exposed through the first aperture 112a and may be formed as parallel bars extending in the longitudinal direction of the first apertures 112a (i.e., the Y direction). Accordingly, the emitters 115 have a larger area than those in the prior art, and thus can guarantee a longer lifetime than those in the prior art even when driven for a long time. In addition, in a case where the cavity 111a is formed between the emitters 115, as described above, a distance between the emitters 115 is smaller than the width W₁ of each of the first apertures 112a but larger than the width W_{c} of each of the cavities 111 a.

The emitters 115 may be formed in various manners. For example, the emitters 115 may be formed by coating a photosensitive CNT paste on the top surface of the rear substrate 110, applying ultraviolet (UV) rays to the bottom surface of the rear substrate 110 to selectively expose the photosensitive CNT paste, and developing the photosensitive CNT paste. In this case, the cathode electrodes 111 should be formed of a transparent conductive material, i.e., ITO, and the conductive layer 112 and the insulation layer 113 should be formed of an opaque material. Alternatively, the emitters 115 may be formed in the following manner. A catalyst metal layer of Ni or Fe is formed on the top surface of each of the cathode electrodes exposed through the first aperture 112a, and CNTs are vertically grown from the surface of the catalyst metal layer by supplying a carbon-based gas, such as CH₄, C₂H₂, or CO₂, to the catalyst metal layer. Still alternatively, the emitters 115 may be formed by depositing photoresist in the first aperture 112a, patterning the photoresist so that the photoresist can remain only on predetermined portions of the top surfaces of the cathode electrodes where the emitters 115 are to be formed, coating a CNT paste on the remaining photoresist, and heating the rear substrate 110 to a predetermined temperature to enable the CNT paste to thermally react to the remaining photoresist. The second and third methods of forming the emitters 115 are free from the restriction of the first method of forming the emitters 115 as to the materials of the cathode electrodes 111, the conductive layer 112 and the insulation layer 113.

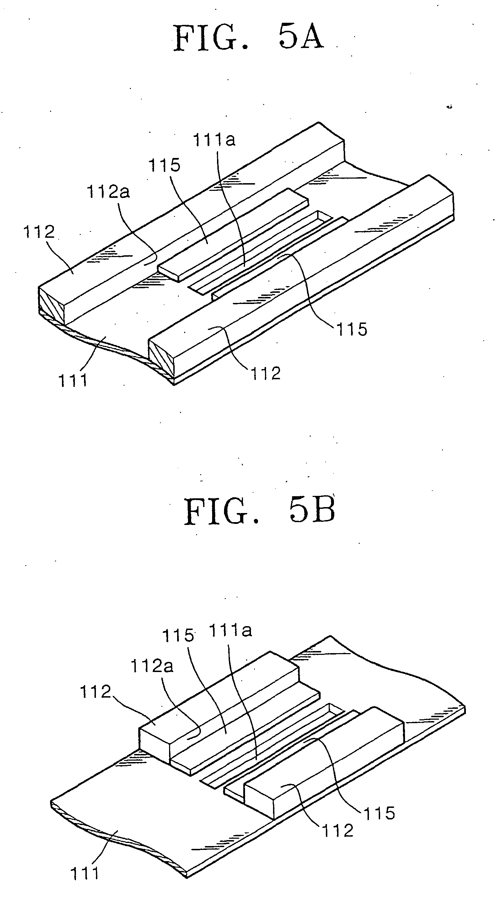

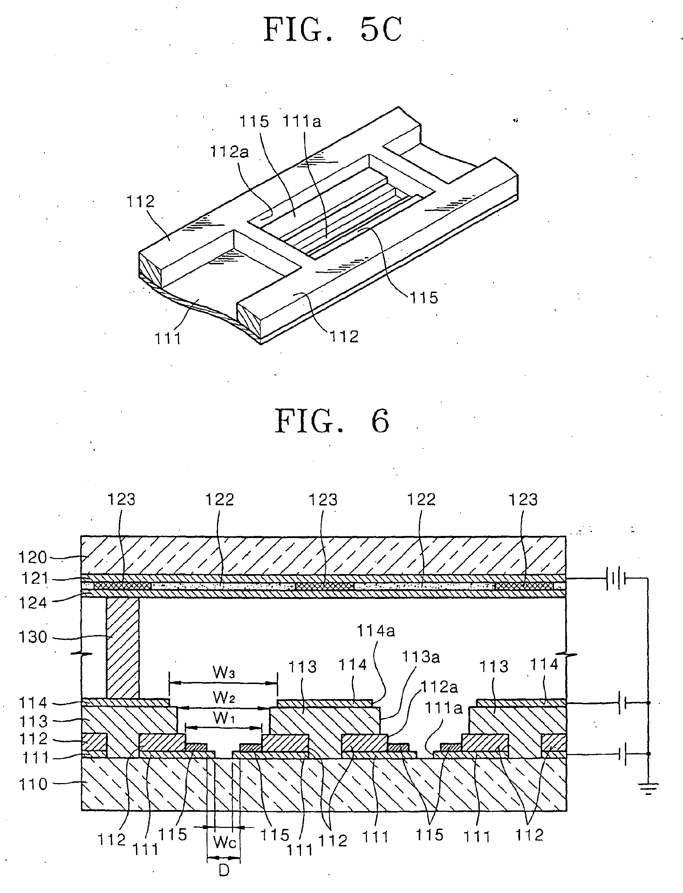

FIGS. 5A, 5B, and 5C illustrate three examples of the conductive layer 112 formed on one of the cathode electrodes 111. Referring to FIG. 5A, conductive layers 112 are respectively formed at both sides of a cathode electrode 111 to extend in the longitudinal direction of the cathode electrode 111, in which case, a first aperture 112a is formed between the conductive layers 112. Emitters 115 are formed between the conductive layers 112 to have a predetermined length in the longitudinal direction of the conductive layers 112 and contact side surfaces of the conductive layers 112. A cavity 111 a is formed in the cathode electrode 111 between the emitters 115 to have the same length as the emitters 115.

Referring to FIG. 5B, conductive layers 112 are formed at either side of a cathode electrode 111 to have a predetermined length, and a first aperture 112a is formed therebetween. In this case, the conductive layers 112 may be formed to have the same length as emitters 115.

Referring to FIG. 5C, a conductive layer 112 is formed on a cathode electrode 111 so as to completely surround a first aperture 112a. All of the four sidewalls of a first aperture 112a are defined by the conductive layer 112. Accordingly, emitters 115 are completely surrounded by the conductive layer 112.

Referring to FIGS. 3 and 4 again, an anode electrode 121 is formed on the bottom surface of the front substrate 120, which faces the top surface of the rear substrate 110, and fluorescent layers 122 are formed of R, G, and B fluorescent materials on the anode electrode 121. The anode electrode 121 is formed of a transparent conductive material, such as ITO, so that visible rays emitted from the fluorescent layers 122 can pass therethrough. The fluorescent layers 122 are formed to extend in the longitudinal direction of the cathode electrodes 111, i.e., in the Y direction.

Black matrices 123 may be formed among the fluorescent layers 122 on the bottom surface of the front substrate 120 so as to improve contrast.

A metallic thin layer 124 may be formed on the fluorescent layers 122 and the black matrices 123. The metallic thin layer 124 is formed of aluminium to have such a small thickness (e.g., several hundreds of Å) that electrons emitted from the emitters 115 can easily pass therethrough. The R, G, and B fluorescent materials of the fluorescent layers 122 emit visible rays when excited by electron beams emitted from the emitters 115, and the visible rays emitted from the R, G, and B materials of the fluorescent layers 122 are reflected by the metallic thin layer 124. Thus, the amount of visible light radiated from the entire FED increases, and eventually, the brightness of the entire FED increases as well.

In a case where the metallic thin layer 124 is formed on the front substrate 120, the anode electrode 121 may not necessarily be formed because the metallic thin layer 124 can serve as a conductive layer, i.e., an anode electrode, when voltage is applied thereto.

The rear substrate 110 and the front substrate 120 are located a predetermined distance apart from each other so that the emitters 115 can face the fluorescent layers 122. The rear substrate 110 and the front substrate 120 are bonded to each other by applying a sealing material (not shown) around them. As described above, the spacer 130 is disposed between the rear substrate 110 and the front substrate 120 so as to maintain the predetermined distance between the rear substrate 110 and the front substrate 120.

The operation of the FED according to the preferred embodiment of the present invention will now be described.

When predetermined voltages are applied to the cathode electrodes 111, the gate electrodes 114, and the anode electrode 121, an electric field is formed among them so that electrons are emitted from the emitters 115. At this time, a voltage of 0 to minus dozens of volts, a voltage of several to dozens of volts, and a voltage of hundreds to thousands of volts are applied to the cathode electrodes 111, the gate electrodes 114, and the anode electrodes 121, respectively. The conductive layer 112 is in contact with the top surface of the cathode electrodes 111, and thus the same voltage applied to the cathode electrodes 111 is applied to the conductive layer 112. The emitted electrons are converted into electron beams, and the electron beams are led to the fluorescent layers 122 so that they can eventually collide with the fluorescent layers 122. As a result, the R, G, and B fluorescent materials of the fluorescent layers 122 are excited and emit visible rays.

As described above, since the emitters 115 are disposed at either side of each of the first apertures 112a, electron beams, which are formed of electrons emitted from the emitters 115, are focused rather than to be widely dispersed. In addition, since the conductive layer 112 is disposed at either side of the emitters 115, the electron beams can be efficiently focused due to an electric field formed by the conductive layer 112.

Moreover, the cavity 111 a may be formed in each of the cathode electrodes 111 so that the emitters 115 can be surrounded by equipotential lines of an electric field formed around the emitters 115. Due to the electric field, current density increases, and a peak in the current density is precisely located in each of the pixels 125 of the fluorescent layers 122. It is possible to more efficiently focus electron beams by adjusting the width W_{C} of the cavity 111 a.

As described above, color purity of an image can be enhanced by improving the focusing electron beams emitted from the emitters 115, and the brightness of the image can be enhanced by precisely placing a peak in current density in each of the pixels 125. Therefore, it is possible to realize an image with high picture quality.

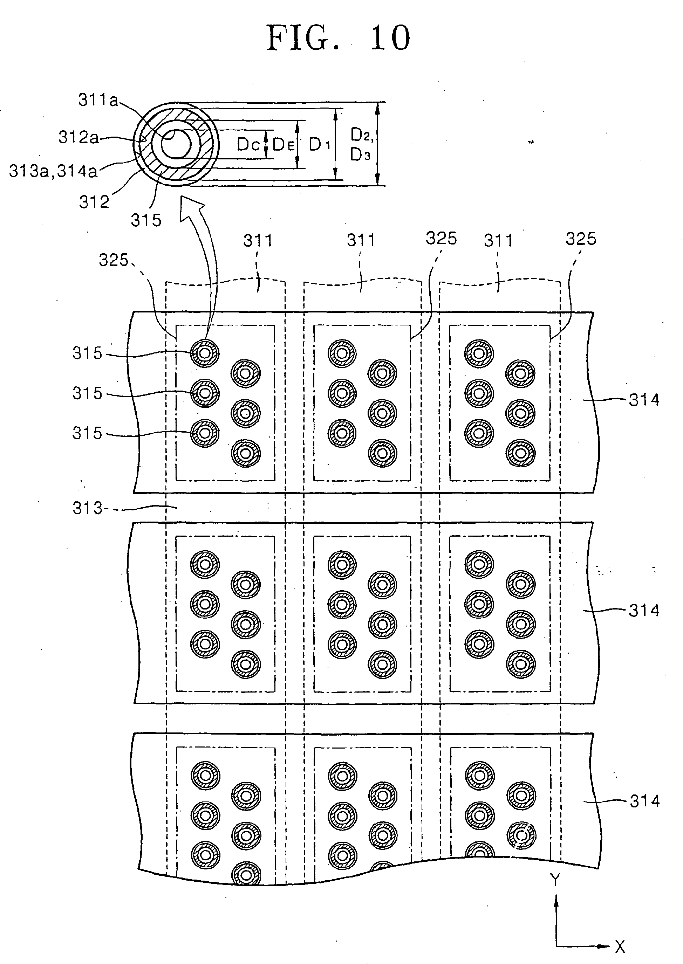

Advantages of the FED according to the preferred embodiment of the present invention will be described in greater detail later with reference to FIGS. 10A through 13C.

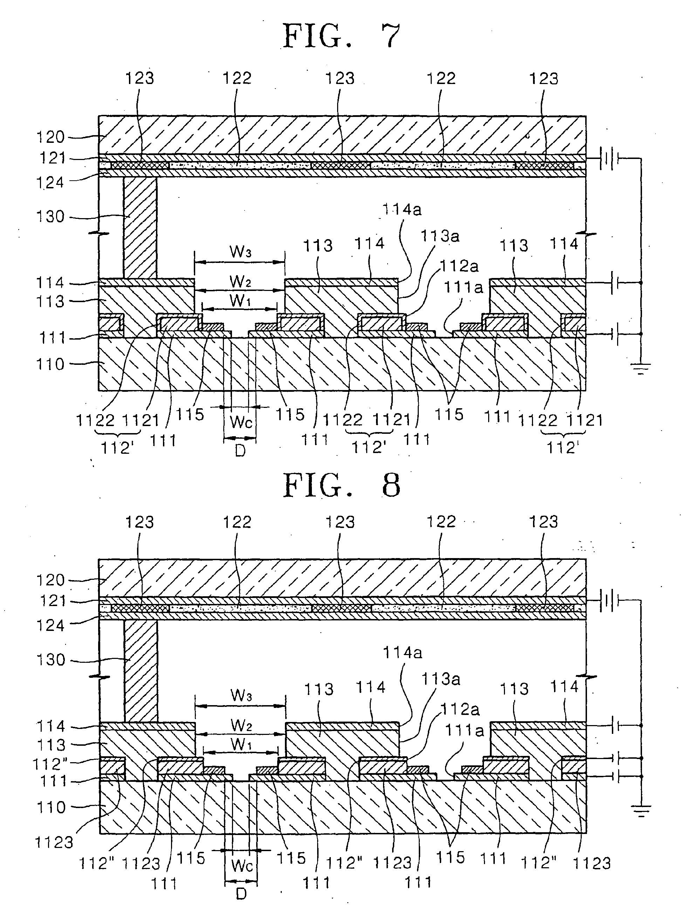

FIGS. 6, 7, and 8 are cross-sectional views of variations of the FED according to the first embodiment of the present invention. Referring to FIG. 6, each of the third apertures 114a may be formed in the gate electrodes 114 to have the width W₃, which is larger than the width W₂ of the second apertures 113a formed in the insulation layer 113. By forming the third apertures 114a to have a larger width than the second apertures 113a, a distance between the cathode electrodes 111 and their respective gate electrodes 114 can be lengthened, and thus, the voltage withstanding characteristics of the FED according to the first embodiment of the present invention can be improved.

Referring to FIG. 7, a conductive layer 112' may comprise an insulation material layer 1121 formed on each of the cathode electrodes 111 and a metal layer 1122 formed to cover the top surface and side surfaces of the insulation material layer 1121, in which case, the metal layer 1122 is electrically connected to the cathode electrodes 111 so as to serve basic functions of the conductive layer 112'. More specifically, the conductive layer 112' may be formed by forming the insulation material layer 1121 on each of the cathode electrodes 111 and forming the metal layer 1122 on the insulation material layer 1121 through a deposition, sputtering, or plating method. The metal layer 1122 can serve as a passivation layer that protects the conductive layer 112' from an etchant when forming the second apertures 113a in the insulation layer 113 using the etchant. Therefore, it is possible to prevent damage to the conductive layer 112' caused by the etchant. More specifically, the conductive layer 112 of FIG. 6 may be damaged by the etchant because it is formed of a conductive paste. However, the conductive layer 112' of FIG. 7 is not aversely affected by the etchant because its surface is formed of the metal layer 1122.

Referring to FIG. 8, an insulation material layer 1123 is formed on the cathode electrodes 111, and a conductive layer 112" is formed on the top surface of the insulation material layer 1123 so that the conductive layer 112" can be disposed as much apart from the cathode electrodes 111 as the thickness of the insulation material layer 1123 and can be insulated from the cathode electrodes 111 by the insulation material layer 1123. In this case, the conductive layer 112" may be connected to a different power source from a power source connected to the cathode electrodes 111, and thus a different voltage from a voltage applied to the cathode electrodes 111 can be applied to the conductive layer 112". Therefore, it is possible to maximize the electron beam-focusing effect of the conductive layer 112" by controlling the voltage applied to the conductive layer 112" independently of the voltage applied to the cathode electrodes 111. Accordingly, the conductive layer 112" can serve as an independent electrode, i.e., a focusing electrode.

The conductive layer 112" may be formed by forming the insulation material layer 1123 on the cathode electrodes 111 and depositing a conductive metallic material on the top surface of the insulation material layer 1123 through a sputtering or plating method. Since the conductive layer 112" is formed of a metallic material rather than to be formed of a conductive paste, the conductive layer 112" can be prevented from being damaged by an etchant used in an etching process for forming the second apertures 113a in the insulation layer 113.

The rest of the elements of the FED of FIG. 8 are the same as their respective counterparts of the FED of FIG. 3 except that the first apertures 112a are formed in the insulation material layer and the conductive layer 112" at regular intervals and the emitters 115 disposed in each of the first apertures 112a are formed in contact with side surfaces of the insulation material layer 1123 exposed through each of the first apertures 112a.

A longitudinal end of the conductive layer 112" may be electrically connected to each of the cathode electrodes 111, in which case, the same voltage can be applied to the conductive layer 112" and the cathode electrodes 111.

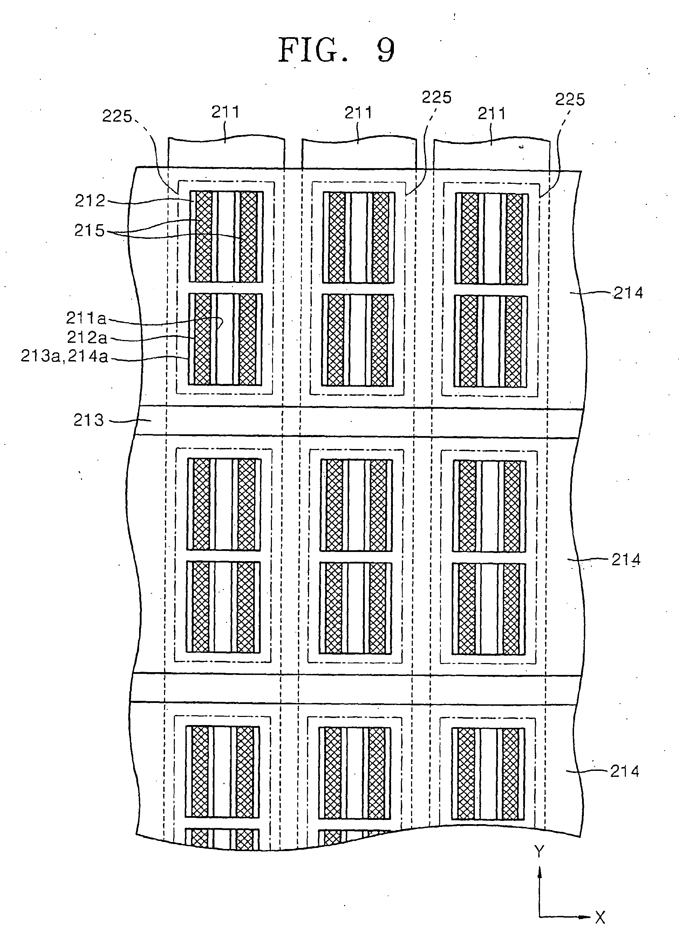

FIG. 9 is a plan view of an FED according to a second embodiment of the present invention. The FED according to the second embodiment of the present invention has the same cross-sectional structure as the FED according to the first embodiment of the present invention, and thus a cross-sectional view of the FED according to the second embodiment of the present invention will not be presented.

Referring to FIG. 9, in each pixel 225, a plurality of first apertures 212a, for example, two first apertures 212a, are formed in a conductive layer 212, two second apertures 213a are formed in an insulation layer 213, and two third apertures 214a, are formed in a gate electrode 214. Emitters 215 are formed in each of the first apertures 212a. The emitters 215, like the emitters 115 in the first embodiment of the present invention, are formed on a cathode electrode 212 exposed through the first aperture 212a. In addition, the emitters 215 are disposed at either side of each of the first apertures 212a so that they are a predetermined distance apart from each other.

A plurality of cavities 211 a, for example, two cavities 211 a, may be formed in the cathode electrode 211 corresponding to each pixel 225.

Other elements of the FED according to the second embodiment of the present invention are the same as their respective counterparts of the FED according to the first embodiment of the present invention, and thus their descriptions will be omitted. The variations of the FED according to the first embodiment of the present invention, shown in FIGS. 6, 7, and 8, may also be applied to the FED according to the second embodiment of the present invention.

FIG. 10 is a plan view of an FED according to a third embodiment of the present invention. The FED according to the third embodiment of the present invention has the same cross-sectional structure as the FED according to the first embodiment of the present invention, and thus a cross-sectional view of the FED according to the third embodiment of the present invention will not be presented.

Referring to FIG. 10, a first aperture 312a formed in a conductive layer 312, a second aperture 313a formed in an insulation layer 313, and a third aperture 314a formed in a gate electrode 314 are all circular. An inner diameter D₃ of the third aperture 314a and an inner diameter D₂ of the second aperture 313a are larger than an inner diameter D₁ of the first aperture 312a. In addition, the inner diameter D₃ of the third aperture 314 may be the same as the inner diameter D₂ of the second aperture 313a.

An emitter 315, which is ring-shaped, is formed on a cathode electrode exposed through the first aperture 312a along an inner circumference of the first aperture 312a. An inner diameter D_{E} of the emitter 315 is smaller than the inner diameter D₁ of the first aperture 312a. The emitter 315, like the emitters 115 in the first embodiment of the preset invention, may be formed of a carbon-based material, e.g., CNTs.

In the third embodiment of the present invention, like in the first embodiment of the present invention, a cavity 311 a, which is circular, may be formed in the cathode electrode 311. The cavity 311 a is disposed inside the emitter 315. Therefore, an inner diameter D_{c} of the cavity 311 a is smaller than the inner diameter D₁ of the first aperture 312a and the inner diameter D_{E} of the emitter 315.

In the third embodiment of the present invention, a plurality of first apertures 312a, a plurality of second apertures 313a, and a plurality of third apertures may be provided for each pixel 325, in which case, the emitter 315 is formed in each of the plurality of first apertures 312a. The rest of the elements of the FED according to the third embodiment of the present invention are the same as their respective counterparts of the FED according to the first embodiment of the present invention, and thus their descriptions will be omitted.

The variations of the FED according to the first embodiment of the present invention, shown in FIGS. 6, 7, and 8, may also be applied to the FED according to the third embodiment of the present invention. In other words, the inner diameter D₃ of the third aperture 314a formed in a gate electrode 314 may be larger than the inner diameter D₂ of the second aperture 313a formed in the insulation layer 313, and the conductive layer 312 may comprise an insulation material layer formed on the cathode electrode 311 and a metal layer formed on the insulation material layer. In addition, the conductive layer 312 may be formed on the top surface of the insulation material layer, which is formed on the cathode electrode 311.

Simulation results of an FED according to a preferred embodiment of the present invention and a conventional FED will now be described in the following paragraphs.

In electron beam emission simulations, the conventional FED of FIG. 1 and the FED according to the first embodiment of the present invention, shown in FIG. 3, were respectively selected as exemplary embodiments of the prior art and the present invention. More specifically, the FEDs according to the first through third embodiments of the present invention have almost the same cross-sectional structure and thus have almost the same electron beam emission characteristics, and thus, the FEDs of FIG. 3, 6, 7, and 8 were selected as exemplary embodiments of the present invention for the electron beam emission simulations.

Before the simulations, design dimensions of elements of each of the conventional FED and the FED according to the first embodiment of the present invention were set. For example, screens of the conventional FED and the FED according to the first embodiment of the present invention were each set to have an RGB trio pitch of about 0.69 mm in a case where they were designed to have an aspect ratio of 16:9, a diagonal line length of 38 inches, and a horizontal resolution of 1280 lines so as to realize high definition (HD)-level picture quality. In this case, in the FED according to the first embodiment of the present invention, an insulation layer is preferably set to have a height of 10 - 20 µm, a conductive layer is preferably set to have a height of 2 - 5 µm, first apertures formed in the conductive layer are preferably set to have a width W₁ of 60 - 80 µm, second apertures formed in the insulation layer are preferably set to have a width W₂ of 70 - 90 µm, third apertures formed in gate electrodes are preferably set to have a width W₃ of 70 - 95 µm, and cavities formed in cathode electrodes are preferably set to have a width W_{c} of 10 - 30 µm.

However, the above-mentioned elements of the FED according to the first embodiment of the present invention may have different measurements from those set forth herein, depending on the size, aspect ratio, and resolution of the screen of the FED according to the first embodiment of the present invention.

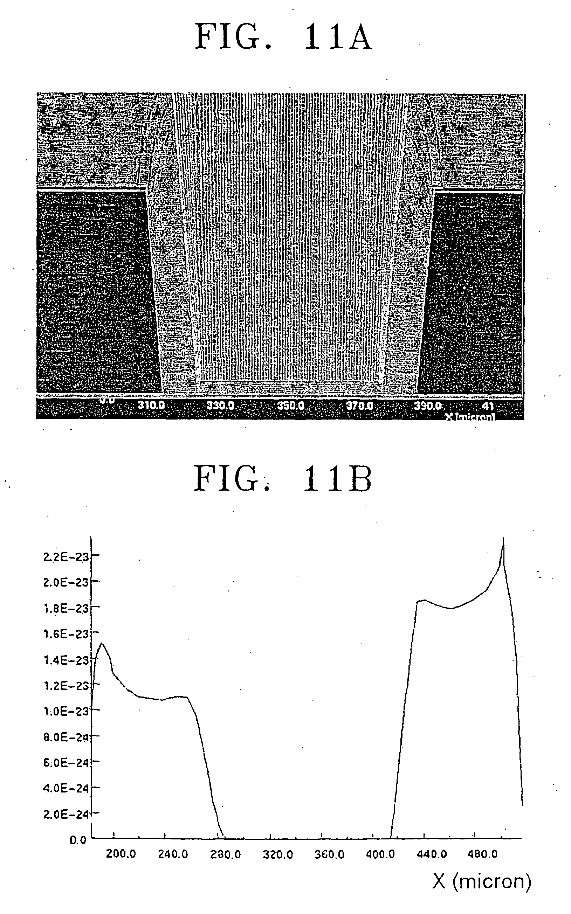

FIGS. 11A through 11C illustrate electron beam emission simulation results of the conventional FED of FIG. 1. Referring to FIG. 11A, an electron beam emitted from an emitter of the conventional FED disperses widely toward fluorescent layers of the conventional FED.

The vertical axis in FIG. 11 B represents current density. Referring to FIG. 11 B, peaks in the current density are located near the edges of a pixel, rather than the center of the pixel, because most electrons are emitted from the edges of the emitters, as described above. If a central portion of the pixel has a low current density, fluorescent materials of the pixel cannot be sufficiently excited, thereby decreasing the brightness of an image displayed on the screen of the conventional FED. Particularly, in a case where emitters are not exactly arranged where they are supposed to be arranged or in a case where front and rear substrates of the conventional FED are not precisely aligned with each other when bonding them together, peaks in current density are likely to be located near the edges of each pixel of the conventional FED, which results in a considerable decrease in color pu rity.

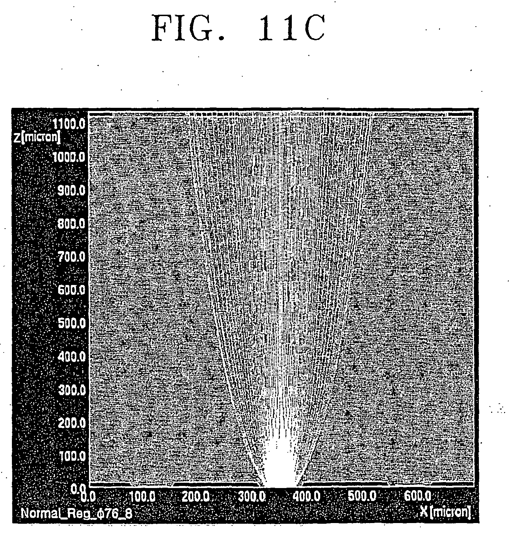

Referring to FIG. 11 C, the spot of an electron beam arriving at a fluorescent layer of the conventional FED undesirably encroaches upon another pixel.

In short, the conventional FED of FIG. 1 may end up in low color purity and low picture quality.

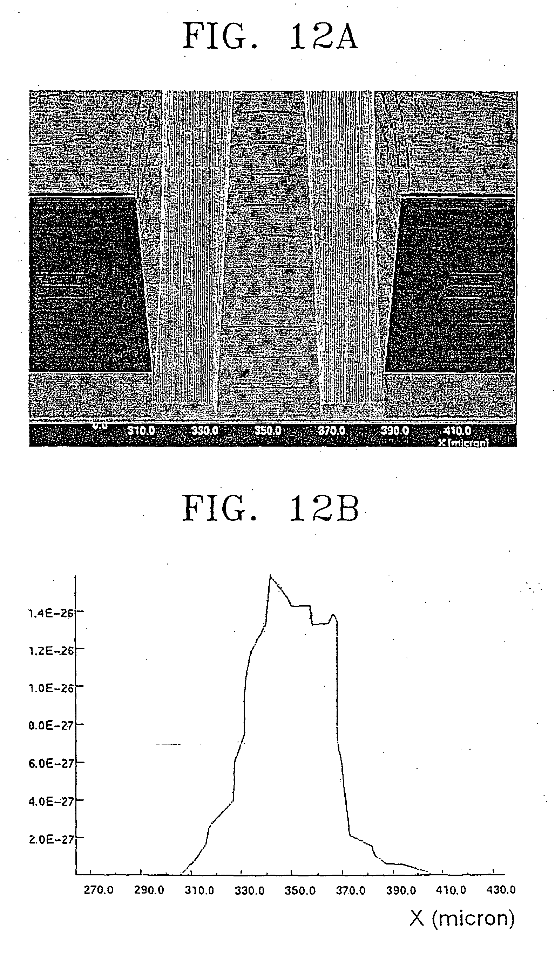

FIGS. 12A through 12C illustrate electron beam emission simulation results of the FED according to the first embodiment of the present invention, shown in FIG. 3, in a case where no cavity is formed in each cathode electrode of the corresponding FED.

Referring to FIG. 12A, electron beam emitted from emitters that are respectively arranged at both sides of a first aperture of the FED according to the first embodiment of the present invention are focused, rather than to disperse widely toward fluorescent layers of the corresponding FED, due to an electric field formed by a conductive layer. Referring to FIG. 12B, peaks in current density are generally located in a central portion of a pixel.

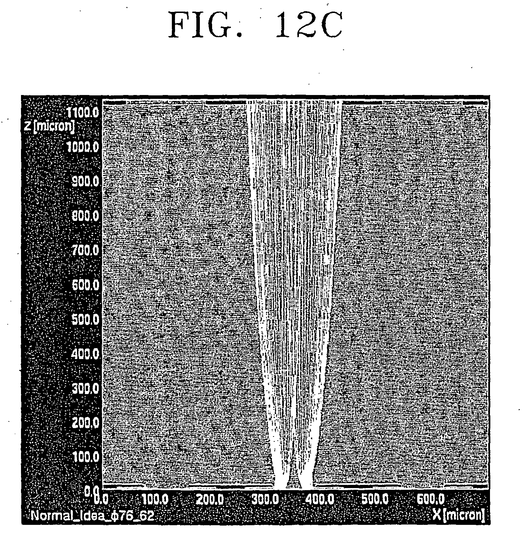

Accordingly, as shown in FIG. 12C, the size of the spot of an electron beam arriving at a fluorescent layer is much smaller in the present invention than in the prior art, and thus it is possible to solve the problem with the prior art that an electron beam aimed at one pixel encroaches upon another pixel as well. Even though current density is generally lower in the present invention than in the prior art, color purity of an image is higher in the present invention than in the prior art because the focusing characteristics of electron beams emitted from the emitters of the FED according to the first embodiment of the present invention are considerably improved, compared to the prior art. In addition, since peaks in the current density are located in a central portion of each pixel, the brightness of an image displayed on the screen of the FED according to the first embodiment of the present invention can be compensated for.

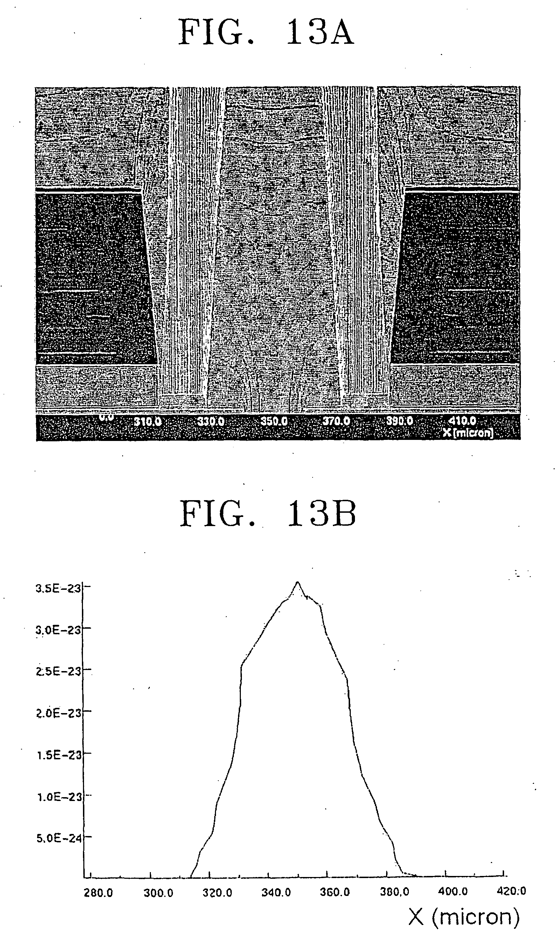

FIGS. 13A through 13C illustrate electron beam emission simulation results of the FED according to the first embodiment of the present invention, shown in FIG. 3, in a case where a cavity is formed in each cathode electrode of the corresponding FED.

Referring to FIG. 13A, due to the cavity formed in each cathode electrode of the FED of FIG. 3, an electric field is formed around the emitters so that the emitters can be surrounded by equipotential lines of the electric field. Due to the electric field, electron beams emitted from the emitters that are respectively disposed at both sides of a first aperture can be efficiently focused proceeding toward fluorescent layers.

Referring to FIG. 13B, a peak in current density is precisely located in a central portion of a pixel.

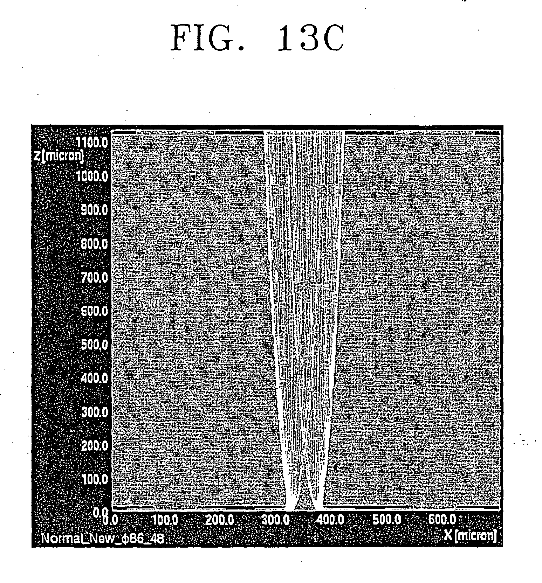

Accordingly, as shown in FIG. 13C, the size of the spot of an electron beam arriving at a fluorescent layer is much smaller in a case where a cavity is formed in each cathode electrode of the FED according to the first embodiment of the present invention than in a case where no cavity is formed in each cathode electrode of the corresponding FED. In addition, current density is higher in a case where a cavity is formed in each cathode electrode of the FED according to the first embodiment of the present invention than in a case where no cavity is formed in each cathode electrode of the corresponding FED and even than in the prior art.

Therefore, by forming a cavity in each cathode electrode of an FED, it is possible to enhance the focusing characteristics of electron beams, increase current density, place a peak in the current density in a central portion of each pixel of the FED, and eventually improve the color purity and brightness of the FED.

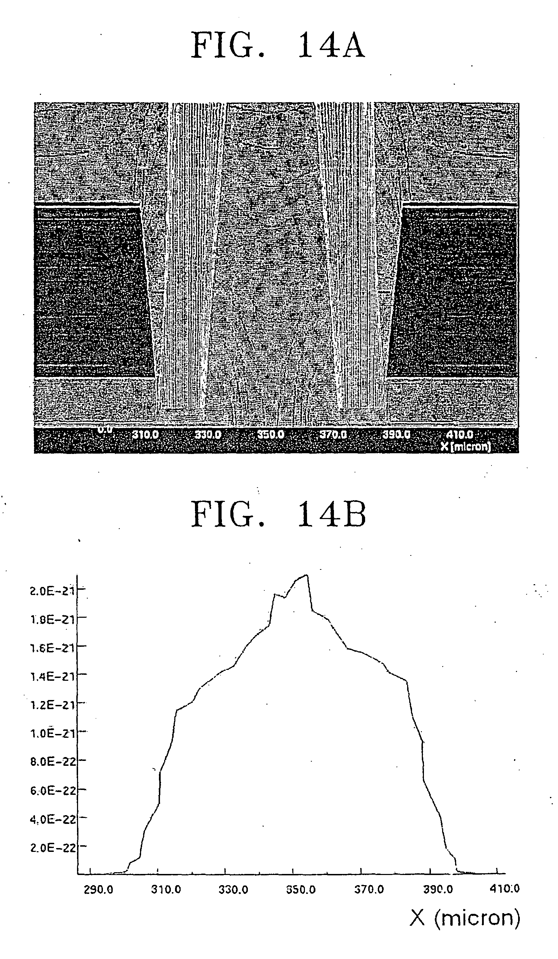

FIGS. 14A through 14C illustrate electron beam emission simulation results of the FED according to the first embodiment of the present invention, shown in FIG. 3, in a case where the width of the cavity formed in each cathode electrode of the corresponding FED has been changed. Simulation conditions of FIGS. 14A through 14C are the same as those of FIGS. 13A through 13C except for the width W_{c} of the cavity formed in each cathode electrode of the FED according to the first embodiment of the present invention. More specifically, the width W_{c} of the cavity formed in each cathode electrode of the FED according to the first embodiment of the present invention is larger in FIGS. 14A through 14C than in FIGS. 13A through 13C.

Referring to FIG. 14A, an electric field is formed around the emitters so that the emitters can be better surrounded by equipotential lines of the electric field than in FIG. 12A.

Referring to FIG. 14B, a peak in current density is precisely located in a central portion of a pixel.

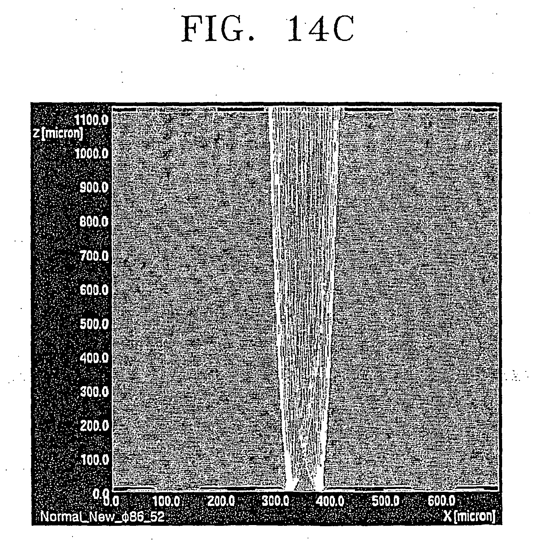

Accordingly, as shown in FIG. 14C, the size of the spot of an electron beam arriving at a fluorescent layer is much smaller than in FIG. 13C. In addition, the current density is also much higher in FIG. 14C than in FIG. 13C.

Therefore, by adjusting the width of a cavity formed in each cathode electrode of an FED, it is possible to considerably increase current density, efficiently focus electron beams, and eventually realize high quality images.

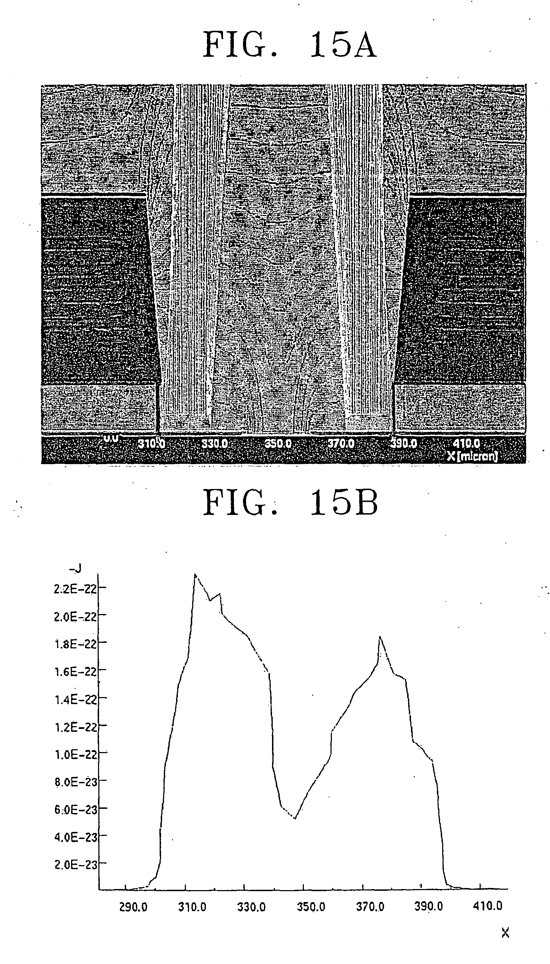

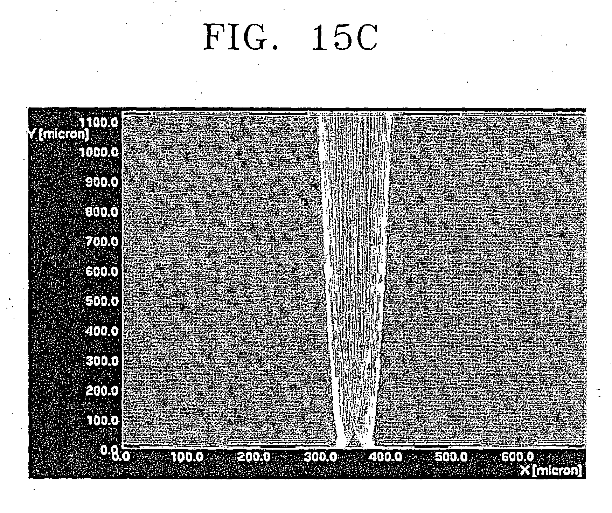

FIGS. 15A, 15B, and 15C are diagrams illustrating electron beam emission simulation results of the FED of FIG. 7.

Referring to FIG. 15A, due to a conductive layer, which is formed of an insulation material layer and a metal layer, and a cavity, which is formed in a cathode electrode, an electric field is formed around emitters so that the emitters can be surrounded by equipotential lines of the electric field. Accordingly, electron beams emitted from the emitters can be efficiently focused. Therefore, as shown in FIG. 15B, peaks in current density are precisely located in their respective pixels. In addition, as shown in FIG. 15C, the size of a spot of an electron beam on a fluorescent layer is very small.

As described above, the FED of FIG. 7 can have the same effects as the FEDs of FIGS. 3 and 6.

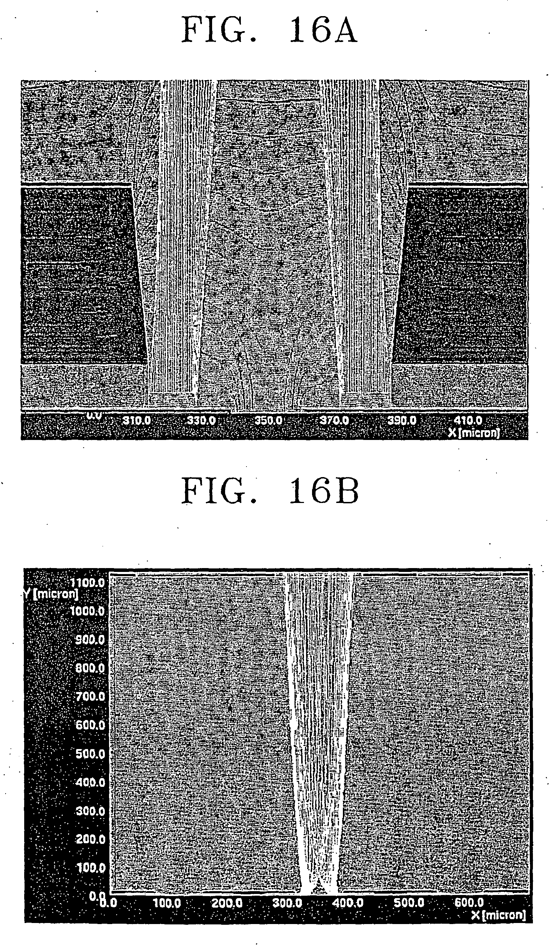

FIGS. 16A and 16B are diagrams illustrating electron beam emission simulation results of the FED of FIG. 8. Referring to FIGS. 16A and 16B, the FED of FIG. 8, in which a conductive layer is formed on the top surface of an insulation material layer so that it can be insulated from a cathode electrode, has the same effects as the FEDs of FIGS. 3, 6, and 7. The FED of FIG. 8 can focus electron beams more efficiently than the FEDs of FIGS. 3, 6, and 7 by adjusting a voltage applied to the conductive layer.

As described above, the FED according to the present invention can improve the focusing characteristics of electron beams emitted from emitters, increase color purity of images, and thus realize high quality images.

In addition, the FED according to the present invention can improve the brightness of images by precisely placing a peak in current density in each pixel.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A field emission display (FED) comprising:
a first substrate (110);
a cathode electrode (111) formed on the first substrate;
a conductive layer (112) formed over the cathode electrode (111) to have a first aperture (112a), through which the cathode electrode is partially exposed;
an insulation layer (113) formed on the conductive layer to have a second aperture (113a), which is connected to the first aperture;
a gate electrode (114) formed on the insulation layer (113) to have a third aperture, which is connected to the second aperture;
an emitter arrangement (115) formed on the cathode electrode at least at opposite sides of the first aperture and exposed through the first aperture; and
a second substrate (120) disposed to face the first substrate with a predetermined distance therebetween, the second substrate, on which an anode electrode and a fluorescent layer having a predetermined pattern are formed.

2. The FED of claim 1, wherein the emitter arrangement comprises emitters disposed a predetermined distance (D) apart from each other at either side of the first aperture.

3. The FED of claim 2, wherein a cavity (111a) is formed in the cathode electrode between the emitters so that the first substrate can be exposed therethrough.

4. The FED of claim 3, wherein the first, second, and third apertures and the cavity are rectangles extending in a longitudinal direction of the cathode electrode.

5. The FED of claim 4, wherein the widths of the third and second apertures (W₂, D₂; W₃, D₃) are larger than the width of the first aperture (W₁, D₁), and the width of the cavity (W_{c}, D_{c}) is smaller than the width of the first aperture.

6. The FED of claim 5, wherein the predetermined distance between the emitters is smaller than the width of the first aperture, and the width of the cavity is smaller than the predetermined distance between the emitters.

7. The FED of claim 5, wherein the width of the third aperture is the same as the width of the second aperture.

8. The FED of claim 5, wherein the width of the third aperture is larger than the width of the second aperture.

9. The FED of claim 2, wherein conductive layers are formed at both sides of the cathode electrode and extend in the longitudinal direction of the cathode electrode, and the first aperture is formed between the conductive layers.

10. The FED of claim 2, wherein conductive layers are formed at both sides of the cathode electrode to have a predetermined length, and the first aperture is formed between the conductive layers.

11. The FED of claim 2, wherein the conductive layer is formed on the cathode electrode to surround the first aperture.

12. The FED of claim 2, wherein the conductive layer comprises an insulation material layer formed to cover a top surface and side surfaces of the cathode electrode and a metal layer formed on the insulation material layer.

13. The FED of claim 2, wherein a plurality of first apertures, a plurality of second apertures, and a plurality of third apertures are formed for each pixel, and the emitters are formed in each of the plurality of first apertures.

14. A field emission display (FED) as claimed in claim 1, wherein:
the first aperture is circular (312a);
the second aperture is circular (313a);
the third aperture is circular (314a); and
the emitter arrangement (315) is formed as a ring on the cathode electrode exposed through the first circular aperture, the emitter arrangement being disposed along an inner circumference of the first circular aperture.

15. The FED of claim 14, wherein a cavity is formed in the cathode electrode in the emitter to be circular so that the first substrate can be exposed therethrough.

16. The FED of claim 14 or 15, wherein the inner diameters of the third circular aperture and the second circular aperture are larger than the inner diameter of the first circular aperture, and the inner diameter of the cavity is smaller than the inner diameter of the first circular aperture.

17. The FED of claim 16, wherein the inner diameter of the emitter is smaller than the inner diameter of the first circular aperture, and the inner diameter of the cavity is smaller than the inner diameter of the emitter.

18. The FED of claim 17, wherein the inner diameter of the third circular aperture is the same as the inner diameter of the second circular aperture.

19. The FED of claim 17, wherein the inner diameter of the third circular aperture is larger than the inner diameter of the second circular aperture.

20. The FED of claim 14, wherein the conductive layer comprises an insulation material layer formed to cover a top surface and side surfaces of the cathode electrode and a metal layer formed on the insulation material layer.

21. The FED of claim 14, wherein a plurality of first circular apertures, a plurality of second circular apertures, and a plurality of third circular apertures are formed for each pixel, and the emitter is formed in each of the plurality of first circular apertures.

22. A field emission display (FED) as claimed in any one of claims 1 to 11, 13 to 19 or 21, further comprising an insulation material layer formed on the cathode electrode, and wherein the conductive layer (112) formed on the cathode electrode (111) is formed on the insulation material layer, the first aperture being formed through the insulation material layer and the conductive layer

23. The FED of claim 22, wherein the conductive layer is insulated from the cathode electrode by the insulation material layer.

24. The FED of claim 22, wherein insulation material layers and then conductive layers are sequentially formed at opposite sides of the cathode electrode and extend in a longitudinal direction of the cathode electrode, and the first aperture is formed between the conductive layers and between the insulation material layers.

25. The FED of claim 22, wherein insulation material layers and then conductive layers are sequentially formed at opposite sides of the cathode electrode to have a predetermined length, and the first aperture is formed between the conductive layers and between the insulation material layers.

26. The FED of claim 22, wherein the insulation material layers and the conductive layer are formed on the cathode electrode to surround the first aperture.

27. The FED of claim 22, wherein a longitudinal end of the conductive layer is electrically connected to the cathode electrode.

28. The FED of any preceding claim, wherein the emitter arrangement is formed of a carbon-based material.

29. The FED of claim 28, wherein the emitter arrangement is formed of carbon nano-tubes.

## Patentansprüche

1. Feldemissionsanzeige (FED) umfassend:
ein erstes Substrat (110);
eine Kathodenelektrode (111) ausgebildet auf dem ersten Substrat;
eine leitfähige Schicht (112) ausgebildet über der Kathodenelektrode (111), so dass sie eine erste Apertur (112a) aufweist, durch die die Kathodenelektrode teilweise freigelegt ist;
eine Isolierschicht (113) ausgebildet auf der leitfähigen Schicht, so dass sie eine zweite Apertur (113a) aufweist, die mit der ersten Apertur verbunden ist;
eine Gate-Elektrode (114) ausgebildet auf der Isolierschicht (113), so dass sie eine dritte Apertur aufweist, die mit der zweiten Apertur verbunden ist;
eine Emitteranordnung (115) ausgebildet auf der Kathodenelektrode mindestens auf gegenüberliegenden Seiten der ersten Apertur und freigelegt durch die erste Apertur; und
ein zweites Substrat (120) so angeordnet, dass es mit einem bestimmten Abstand dazwischen dem ersten Substrat zugewandt ist, wobei auf dem zweiten Substrat eine Anodenelektrode und eine fluoreszierende Schicht mit einer bestimmten Struktur ausgebildet sind.

2. FED nach Anspruch 1, wobei die Emitteranordnung Emitter umfasst, die in einem bestimmten Abstand (D) voneinander entfernt an jeder Seite der ersten Apertur angeordnet sind.

3. FED nach Anspruch 2, wobei ein Hohlraum (111a) in der Kathodenelektrode zwischen den Emittern so ausgebildet ist, dass das erste Substrat durch diesen hindurch freigelegt werden kann.

4. FED nach Anspruch 3, wobei die erste, zweite und dritte Apertur und der Hohlraum Rechtecke sind, die sich in Längsrichtung der Kathodenelektrode erstrecken.

5. FED nach Anspruch 4, wobei die Breiten der dritten und zweiten Apertur (w₂, D₂; w₃, D₃) größer sind als die Breite der ersten Apertur (w₁, D₁) und die Breite des Hohlraums (w_{c}, D_{c}) geringer ist als die Breite der ersten Apertur.

6. FED nach Anspruch 5, wobei der bestimmte Abstand zwischen den Emittern geringer ist als die Breite der ersten Apertur und die Breite des Hohlraums geringer ist als der bestimmte Abstand zwischen den Emittern.

7. FED nach Anspruch 5, wobei die Breite der dritten Apertur gleich der Breite der zweiten Apertur ist.

8. FED nach Anspruch 5, wobei die Breite der dritten Apertur größer ist als die Breite der zweiten Apertur.

9. FED nach Anspruch 2, wobei leitfähige Schichten auf beiden Seiten der Kathodenelektrode ausgebildet sind und sich in Längsrichtung der Kathodenelektrode erstrecken, und die erste Apertur zwischen den leitfähigen Schichten ausgebildet ist.

10. FED nach Anspruch 2, wobei leitfähige Schichten auf beiden Seiten der Kathodenelektrode so ausgebildet sind, dass sie eine bestimmte Länge aufweisen, und die erste Apertur zwischen den leitfähigen Schichten ausgebildet ist.

11. FED nach Anspruch 2, wobei die leitfähige Schicht auf der Kathodenelektrode so ausgebildet ist, dass sie die erste Apertur umgibt.

12. FED nach Anspruch 2, wobei die leitfähige Schicht eine lsoliermaterialschicht, die so ausgebildet ist, dass sie eine Oberseite und Seitenflächen der Kathodenelektrode bedeckt, und eine auf der Isoliermaterialschicht ausgebildete Metallschicht umfasst.

13. FED nach Anspruch 2, wobei eine Mehrzahl von ersten Aperturen, eine Mehrzahl von zweiten Aperturen und eine Mehrzahl von dritten Aperturen für jedes Pixel ausgebildet sind und die Emitter in jeder der Mehrzahl von ersten Aperturen ausgebildet sind.

14. Feldemissionsanzeige (FED) nach Anspruch 1, wobei:
die erste Apertur kreisförmig ist (312a),
die zweite Apertur kreisförmig ist (313a),
die dritte Apertur kreisförmig ist (314a) und
die Emitteranordnung (315) als Ring auf der Kathodenelektrode ausgebildet ist, der durch die erste kreisförmige Apertur freigelegt ist, wobei die Emitteranordnung entlang einem Innenumfang der ersten kreisförmigen Apertur angeordnet ist.

15. FED nach Anspruch 14, wobei ein Hohlraum in der Kathodenelektrode im Emitter kreisförmig ausgebildet ist, so dass das erste Substrat hier hindurch freigelegt werden kann.

16. FED nach Anspruch 14 oder 15, wobei die Innendurchmesser der dritten kreisförmigen Apertur und der zweiten kreisförmigen Apertur größer sind als der Innendurchmesser der ersten kreisförmigen Apertur und der Innendurchmesser des Hohlraums geringer ist als der Innendurchmesser der ersten kreisförmigen Apertur.

17. FED nach Anspruch 16, wobei der Innendurchmesser des Emitters geringer ist als der Innendurchmesser der ersten kreisförmigen Apertur und der Innendurchmesser des Hohlraums geringer ist als der Innendurchmesser des Emitters.

18. FED nach Anspruch 17, wobei der Innendurchmesser der dritten kreisförmigen Apertur gleich dem Innendurchmesser der zweiten kreisförmigen Apertur ist.

19. FED nach Anspruch 17, wobei der Innendurchmesser der dritten kreisförmigen Apertur größer ist als der Innendurchmesser der zweiten kreisförmigen Apertur.

20. FED nach Anspruch 14, wobei die leitfähige Schicht eine Isoliermaterialschicht, die so ausgebildet ist, dass sie eine Oberseite und Seitenflächen der Kathodenelektrode bedeckt, und eine auf der Isoliermaterialschicht ausgebildete Metallschicht umfasst.

21. FED nach Anspruch 14, wobei eine Mehrzahl von ersten kreisförmigen Aperturen, eine Mehrzahl von zweiten kreisförmigen Aperturen und eine Mehrzahl von dritten kreisförmigen Aperturen für jedes Pixel ausgebildet sind und der Emitter in jeder der Mehrzahl von ersten kreisförmigen Aperturen ausgebildet ist.

22. Feldemissionsanzeige (FED) nach einem der Ansprüche 1 bis 11, 13 bis 19 oder 21, ferner umfassend eine auf der Kathodenelektrode ausgebildete Isoliermaterialschicht, und wobei die auf der Kathodenelektrode (111) ausgebildete leitfähige Schicht (112) auf der Isoliermaterialschicht ausgebildet ist, wobei die erste Apertur durch die Isoliermaterialschicht und die leitfähige Schicht hindurch ausgebildet ist.

23. FED nach Anspruch 22, wobei die leitfähige Schicht von der Kathodenelektrode durch die Isoliermaterialschicht isoliert ist.

24. FED nach Anspruch 22, wobei Isoliermaterialschichten und dann leitfähige Schichten sequentiell auf gegenüberliegenden Seiten der Kathodenelektrode ausgebildet sind und sich in Längsrichtung der Kathodenelektrode erstrecken und die erste Apertur zwischen den leitfähigen Schichten und zwischen den Isoliermaterialschichten ausgebildet ist.

25. FED nach Anspruch 22, wobei Isoliermaterialschichten und dann leitfähige Schichten sequentiell auf gegenüberliegenden Seiten der Kathodenelektrode so ausgebildet sind, dass sie eine bestimmte Länge aufweisen, und die erste Apertur zwischen den leitfähigen Schichten und zwischen den Isoliermaterialschichten ausgebildet ist.

26. FED nach Anspruch 22, wobei die Isoliermaterialschicht und die leitfähige Schicht auf der Kathodenelektrode so ausgebildet sind, dass sie die erste Apertur umgeben.

27. FED nach Anspruch 22, wobei ein Längsende der leitfähigen Schicht mit der Kathodenelektrode elektrisch verbunden ist.

28. FED nach einem der vorhergehenden Ansprüche, wobei die Emitteranordnung aus einem Material auf Kohlenstoffbasis gebildet ist.

29. FED nach Anspruch 28, wobei die Emitteranordnung aus Kohlenstoff-Nanoröhrchen gebildet ist.

## Revendications

1. Affichage à émission de champ (FED, initiales de Field émission display) comprenant :
> un premier substrat (110) ;
> une électrode de cathode (111) formée sur le premier substrat ;
> une couche conductrice (112) formée au-dessus de l'électrode de cathode (111) de manière à comporter une première ouverture (112a) à travers laquelle l'électrode de cathode est partiellement exposée ;
> une couche isolante (113) formée sur la couche conductrice de manière à comporter une deuxième ouverture (113a) qui est connectée à la première ouverture ;
> une électrode de grille (114) formée sur la couche isolante (113) de manière à comporter une troisième ouverture, qui est connectée à la deuxième ouverture ;
> un agencement émetteur (115) formé sur l'électrode de cathode au moins à des côtés opposés de la première ouverture et exposé à travers la première ouverture ; et
> un deuxième substrat (120) disposé de manière à être tourné vers le premier substrat en ménageant une distance prédéterminée entre eux, une électrode d'anode et une couche fluorescente d'un motif prédéterminé étant formées sur le deuxième substrat.

2. FED selon la revendication 1, dans lequel l'agencement émetteur comprend des émetteurs disposés à une distance prédéterminée (D) les uns des autres sur chaque côté de la première ouverture.

3. FED selon la revendication 2, dans lequel une cavité (111a) est formée dans l'électrode de cathode entre les émetteurs d'une manière telle que le premier substrat peut être exposé à travers cette cavité.

4. FED selon la revendication 3, dans lequel les première, deuxième et troisième ouvertures et la cavité sont des rectangles qui s'étendent dans une direction longitudinale de l'électrode de cathode.

5. FED selon la revendication 4, dans lequel les largeurs des troisième et deuxième ouvertures (W₂, D₂, W₃, D₃) sont supérieures à la largeur de la première ouverture (W₁, D₁), et la largeur de la cavité (W_{c}, D) est inférieure à la largeur de la première ouverture.

6. FED selon la revendication 5, dans lequel la distance prédéterminée entre les émetteurs est inférieure à la largeur de la première ouverture, et la largeur de la cavité est inférieure à la distance prédéterminée entre les émetteurs.

7. FED selon la revendication 5, dans lequel la largeur de la troisième ouverture est égale à la largeur de la deuxième ouverture.

8. FED selon la revendication 5, dans lequel la largeur de la troisième ouverture est supérieure à la largeur de la deuxième ouverture.

9. FED selon la revendication 2, dans lequel des couches conductrices sont formées sur les deux côtés de l'électrode de cathode et s'étendent dans la direction longitudinale de l'électrode de cathode, et la première ouverture est formée entre les couches conductrices.

10. FED selon la revendication 2, dans lequel des couches conductrices sont formées sur les deux côtés de l'électrode de cathode à une longueur prédéterminée, et la première ouverture est formée entre les couches conductrices.

11. FED selon la revendication 2, dans lequel la couche conductrice est formée sur l'électrode de cathode de manière à entourer la première ouverture.

12. FED selon la revendication 2, dans lequel la couche conductrice comprend une couche de matière isolante formée de façon à couvrir une surface supérieure et des surfaces latérales de l'électrode de cathode, et une couche métallique formée sur la couche de matière isolante.

13. FED selon la revendication 2, dans lequel une pluralité de premières ouvertures, une pluralité de deuxièmes ouvertures, et une pluralité de troisièmes ouvertures sont formées pour chaque pixel, et les émetteurs sont formés dans chaque ouverture de la pluralité de premières ouvertures.

14. Affichage à émission de champ (FED) selon la revendication 1, dans lequel :
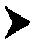 la première ouverture est circulaire (312a),
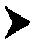 la deuxième ouverture est circulaire (313a),
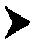 la troisième ouverture est circulaire (314a), et
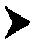 l'agencement émetteur (315) est en forme d'anneau sur l'électrode de cathode, exposé à travers la première ouverture circulaire, l'agencement émetteur étant disposé le long d'une circonférence interne de la première ouverture circulaire.

15. FED selon la revendication 14, dans lequel une cavité est formée dans l'électrode de cathode dans l'émetteur de manière à être circulaire afin que le premier substrat puisse être exposé à travers cette cavité.

16. FED selon la revendication 14 ou 15, dans lequel les diamètres internes de la troisième ouverture circulaire et de la deuxième ouverture circulaire sont supérieurs au diamètre interne de la première ouverture circulaire, et le diamètre interne de la cavité est inférieur au diamètre interne de la première ouverture circulaire.

17. FED selon la revendication 16, dans lequel le diamètre interne de l'émetteur est inférieur au diamètre interne de la première ouverture circulaire, et le diamètre interne de la cavité est inférieur au diamètre interne de l'émetteur.

18. FED selon la revendication 17, dans lequel le diamètre interne de la troisième ouverture circulaire est égal au diamètre interne de la deuxième ouverture circulaire.

19. FED selon la revendication 17, dans lequel le diamètre interne de la troisième ouverture circulaire est supérieur au diamètre interne de la deuxième ouverture circulaire.

20. FED selon la revendication 14, dans lequel la couche conductrice comprend une couche de matière isolante, formée de manière à couvrir une surface supérieure et des surfaces latérales de l'électrode de cathode, et une couche métallique formée sur la couche de matière isolante.

21. FED selon la revendication 14, dans lequel une pluralité de premières ouvertures circulaires, une pluralité de deuxièmes ouvertures circulaires, et une pluralité de troisièmes ouvertures circulaires sont formées pour chaque pixel, et l'émetteur est formé dans chaque ouverture de la pluralité de premières ouvertures circulaires.

22. Affichage à émission de champ (FED) selon l'une quelconque des revendications 1 à 11, 13 à 19, ou 21, qui comprend en outre une couche de matière isolante formée sur l'électrode de cathode, et dans lequel la couche conductrice (112) formée sur l'électrode de cathode (111) est formée sur la couche de matière isolante, la première ouverture étant formée à travers la couche de matière isolante et la couche conductrice.

23. FED selon la revendication 22, dans lequel la couche conductrice est isolée de l'électrode de cathode par la couche de matière isolante.

24. FED selon la revendication 22, dans lequel des couches de matière isolante et ensuite des couches conductrices sont formées en séquence à des côtés opposés de l'électrode de cathode et s'étendent dans une direction longitudinale de l'électrode de cathode, et la première ouverture est formée entre les couches conductrices et entre les couches de matière isolante.

25. FED selon la revendication 22, dans lequel des couches de matière isolante et ensuite des couches conductrices d'une longueur prédéterminée sont formées en séquence à des côtés opposés de l'électrode de cathode, et la première ouverture est formée entre les couches conductrices et entre les couches de matière isolante.

26. FED selon la revendication 22, dans lequel la couche de matière isolante et la couche conductrice sont formées sur l'électrode de cathode de manière à entourer la première ouverture.

27. FED selon la revendication 22, dans lequel une extrémité longitudinale de la couche conductrice est connectée électriquement à l'électrode de cathode.

28. FED selon l'une quelconque des revendications précédentes, dans lequel l'agencement émetteur est formé d'une matière à base de carbone.

29. FED selon la revendication 28, dans lequel l'agencement émetteur est formé de nano-tubes de carbone.
